# EUROPEAN PATENT SPECIFICATION

(11) **EP 4 224 278 B1**
(45) Date of publication and mention of the grant of the patent: **12.03.2025**
(21) Application number: 21898339.3
(22) Date of filing: 13.10.2021
(51) Int. Cl.: G06F 1/16, G09F 9/30, H04M 1/02, H04M 1/18

(54) **ELECTRONIC DEVICE COMPRISING FOREIGN MATERIAL BLOCKING STRUCTURE**
ELEKTRONISCHE VORRICHTUNG MIT FREMDKÖRPERBLOCKIERSTRUKTUR
DISPOSITIF ÉLECTRONIQUE COMPRENANT UNE STRUCTURE DE BLOCAGE MATÉRIEL

(30) Priority: 26.11.2020 KR 20200160940; 11.12.2020 KR 20200172979
(43) Date of publication of application: 09.08.2023
(73) Proprietor: Samsung Electronics Co., Ltd., Suwon-si, Gyeonggi-do 16677 (KR)
(72) Inventor: YANG, Soonwoong, Suwon-si, Gyeonggi-do 16677 (KR)
(74) Representative: Gulde & Partner
(86) International application number: PCT/KR2021/014102
(87) International publication number: WO 2022/114513

(56) References cited:
- KR-A- 20150 099 668
- KR-A- 20200 007 366
- KR-A- 20200 128 319
- US-A1- 2019 268 455
- US-B1- 10 729 025
- US-B1- 10 742 784
- US-B1- 10 747 269

## Description

### [Technical Field]

The present disclosure relates to an electronic device including a foreign material blocking structure.

### [Background Art]

Electronic devices are gradually becoming slimmer, becoming more rigid, being strengthened in design aspects, and being improved to differentiate functional elements thereof. Electronic devices are being gradually transformed from a uniform rectangular shape into various shapes. An electronic device may have a transformable structure that is capable of providing a large-screen display while being convenient to carry. For example, as part of the transformable structure, the electronic device may have a structure capable of varying the display area of a flexible display (e.g., a rollable structure or a slidable structure) by supporting housings that operate in a sliding manner relative to each other. Such an electronic device may require an operating structure that is not affected by external environments.

Documents (US10742784B1, US20190268455A1, KR20200128319A, US10747269B1, KR20200007366A, US10729025B1, KR20150099668A) disclose conventional electronic devices with slidable or rollable display.

### [Disclosure of Invention]

### [Technical Problem]

The electronic device may include a transformable slidable electronic device (e.g., a rollable electronic device) that is capable of expanding the display area when used. The slidable electronic device may include a first housing (e.g., a first housing structure, a base housing, a base bracket, or a base structure) and a second housing (e.g., a second housing structure, a slide housing, a slide bracket, or a slide structure), which are movably coupled to each other in a manner of being at least partially fitted together. For example, the first housing and the second housing are slidably operated with respect to each other and support at least a portion of a flexible display (or an expandable display), whereby, in a slide-in state, the flexible display may be induced to have a first display area, and in a slide-out state, the flexible display may be induced to have a second display area that is greater than the first display area. Since at least a portion of the flexible display needs to be introduced into the inner space of the housing, the flexible display may be disposed to have a predetermined separation distance (e.g., a separation space) from the housing in order to minimize interference during a sliding motion.

However, the separation space acts as an inflow path through which external foreign materials are introduced, and the foreign materials introduced into the electronic device cause scratches on the flexible display and, in severe cases, damage to the flexible display. Furthermore, foreign materials introduced into the housing may cause malfunction of the electronic device by adversely affecting internal electrical elements.

According to various embodiments of the disclosure, it is possible to provide an electronic device including a foreign material blocking structure.

According to various embodiments, it is possible to provide an electronic device including a foreign material blocking structure capable of preventing damage to a flexible display by blocking external foreign materials in a slide-in state and a slide-out state.

According to various embodiments, it is possible to provide an electronic device including a foreign material blocking structure capable of inducing smooth operation of a flexible display during an operation switching from a slide-in state to a slide-out state.

### [Solution to Problem]

The present invention is defined by the appended set of claims. According to various embodiment, an electronic device may include a first housing, a second housing slidably connected to the first housing, a flexible display disposed to be supported by the first housing and at least partially supported by the second housing, wherein the flexible display includes a first portion disposed to be seen from outside in a slide-in state, and a second portion extending from the first portion, the second portion being at least partially accommodated in an inner space of the second housing in the slide-in state and exposed to be seen from outside in the slide-out state, a slide stopper fixed to the second portion and disposed to be slidable in the inner space of the second housing, and a blocking member included in the second housing and disposed to be movable in the inner space to be pressed by the first housing in the slide-in state and pressed by the slide stopper in the slide-out state. The blocking member may be configured to come into contact with an outer surface of the flexible display by being pressed by the first housing in the slide-in state and by being pressed by the slide stopper in the slide-out state.

### [Advantageous Effects of Invention]

An electronic device according to an embodiment of the disclosure includes a blocking member disposed to be moved according to a sliding motion of a flexible display, and in a slide-in state and a slide-out state, the blocking member blocks foreign materials introduced into a separation space between a housing and a flexible display. As a result, damage to the flexible display caused by foreign materials can be reduced.

In addition, various effects directly or indirectly identified through the disclosure may be provided.

### [Brief Description of Drawings]

In connection with the description of the drawings, the same or similar components may be denoted by the same or similar reference numerals.
FIG. 1 is a block diagram of an electronic device.
FIG. 2A is a perspective view illustrating an electronic device according to various embodiments of the disclosure in a slide-in state.
FIG. 2B is a perspective view illustrating the electronic device according to various embodiments of the disclosure in a slide-out state.
FIG. 3 is an exploded perspective view illustrating an electronic device according to various embodiments of the disclosure.
FIG. 4 is a view illustrating a configuration of a flexible display according to various embodiments of the disclosure.
FIG. 5 is a view illustrating a state in which a flexible display is supported by a support plate and a support roller according to various embodiments of the disclosure.
FIG. 6 is an exploded perspective view of a second housing including a blocking member according to various embodiments of the disclosure.
FIGS. 7A and 7B are views illustrating a state in which a blocking member is coupled to a first housing according to various embodiments of the disclosure.
FIGS. 8A and 8B are partial cross-sectional views of the electronic device according to various embodiments of the disclosure taken along line 8a-8a in FIG. 2A.
FIGS. 9A and 9B are cross-sectional views of an electronic device according to various embodiments of the disclosure in an intermediate state.
FIGS. 10A and 10B are partial cross-sectional views of the electronic device according to various embodiments of the disclosure taken along line 10a-10a in FIG. 2B.

### [Mode for the Invention]

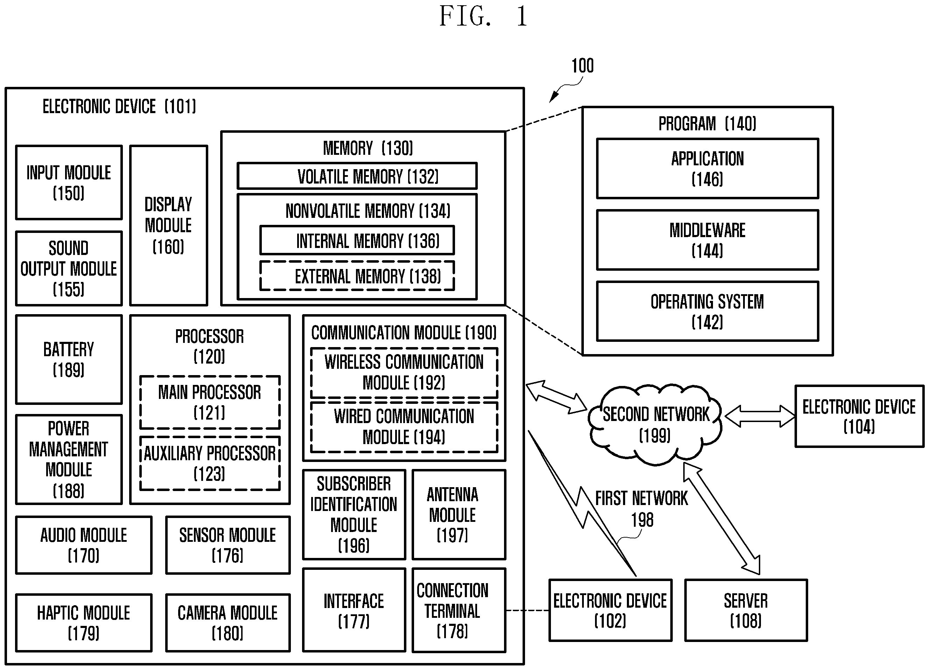

FIG. 1 illustrates an example electronic device in a network environment according to an embodiment of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). The electronic device 101 may communicate with the electronic device 104 via the server 108. The electronic device 101 includes a processor 120, memory 130, an input device 150, an audio output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by another component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The audio output device 155 may output sound signals to the outside of the electronic device 101. The audio output device 155 may include, for example, a speaker or a receiver. The speaker may be used for general purposes, such as playing multimedia or playing record, and the receiver may be used for an incoming call. The receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. The display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input device 150, or output the sound via the audio output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture an image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102and 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

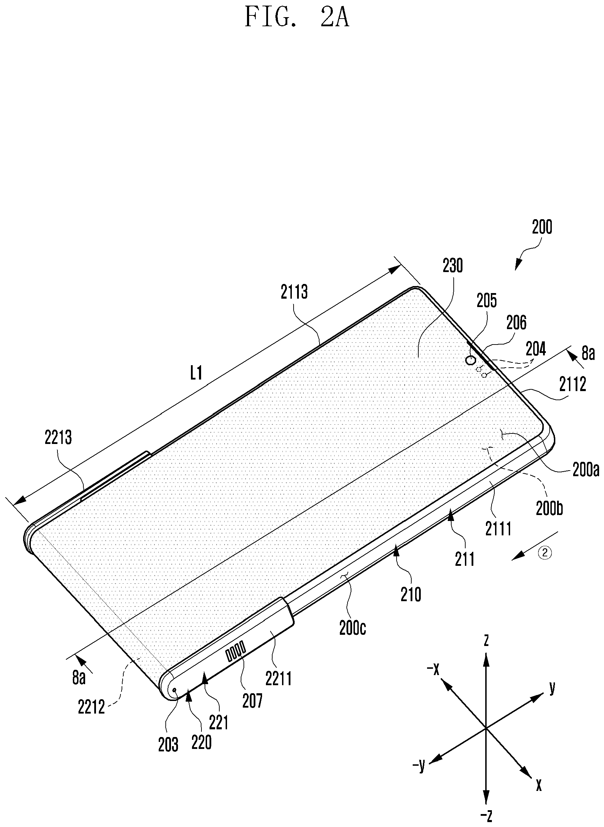

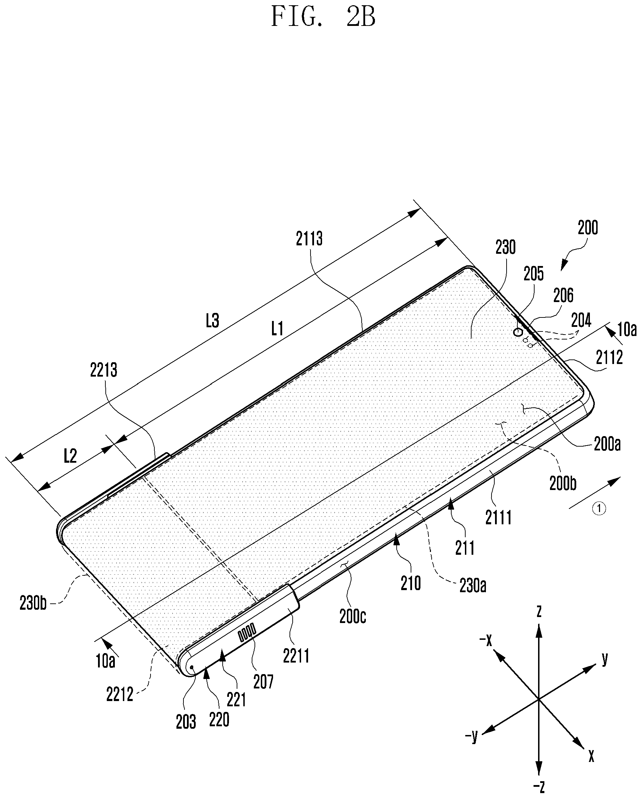

FIG. 2A is a perspective view illustrating an electronic device according to various embodiments of the disclosure in a slide-in state. FIG. 2B is a perspective view illustrating the electronic device according to various embodiments of the disclosure in a slide-out state.

The electronic device 200 of FIGS. 2A and 2B may further include embodiments that are at least partially similar to or different from the electronic device 101 of FIG. 1.

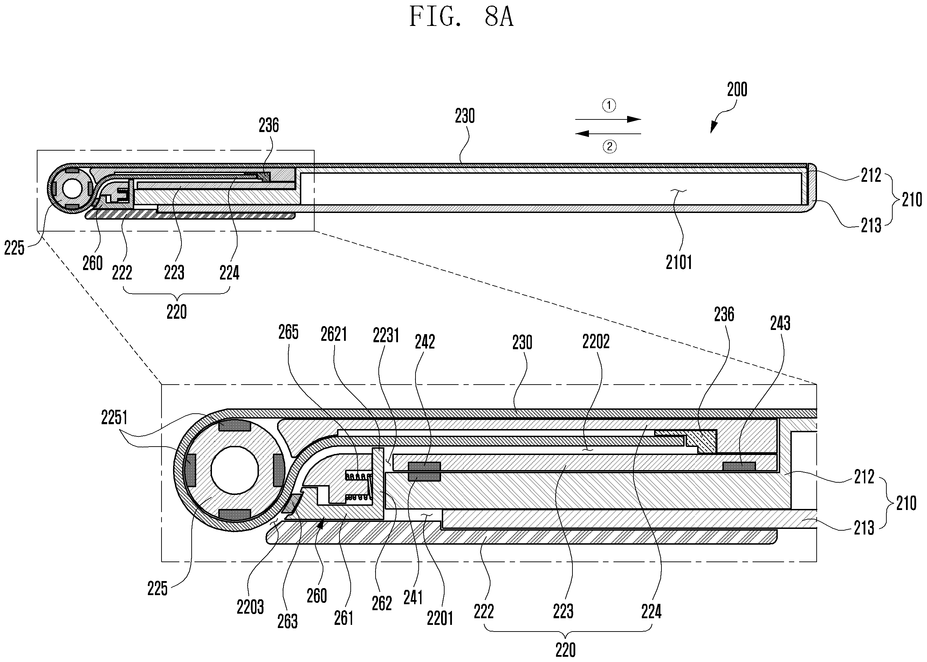

Referring to FIGS. 2A and 2B, the electronic device 200 includes a first housing 210, a second housing 220 slidably coupled to the first housing 210, and a flexible display 230 (e.g., an expandable display) arranged to be supported by at least a portion of the first housing 210 and the second housing 220. In some embodiments, the electronic device 200 may include a bendable member or a bendable support member (not illustrated) (e.g., a multi-joint hinge module), which at least partially forms the same plane as at least a portion of the first housing 210 in the slide-out state and is at least partially accommodated into the inner space (e.g., the second space 2202 in FIG. 8A) of the electronic device 200 in the slide-in state. According to an embodiment, in the slide-in state, at least a portion of the flexible display 230 may be accommodated in the inner space (e.g., the second space 2202 of FIG. 8A) of the electronic device 200 not to be seen from outside. According to an embodiment, in the slide-out state, at least a portion of the flexible display 230 may be disposed to be seen from the outside while being supported by at least a portion of the first housing 210 and the second housing 220.

According to various embodiments, the electronic device 200 may include a front surface 200a (e.g., a first surface), a rear surface 200b (e.g., a second surface) facing a direction opposite to the front surface 200a, and a side surface 200c surrounding the space between the front surface 200a and the rear surface 200b. According to an embodiment, the electronic device 200 may include a first housing 210 including a first side surface member 211 and a second housing 220 including a second side surface member 221. According to an embodiment, the first side surface member 211 may include a first side surface 2111 having a first length along a predetermined direction (e.g., the y-axis direction), a second side surface 2112 extending from the first side surface 2111 along a direction (e.g., the -x-axis direction) substantially perpendicular to the first side surface 2111 and having a second length shorter than the first length, and a third side surface 2113 extending from the second side surface 2112 to be substantially parallel to the first side surface 2111 and having the first length. According to an embodiment, at least a portion of the first side surface member 211 may be made of a conductive material (e.g., metal). According to an embodiment, at least a portion of the first side surface member 211 may include at least one conductive portion split by at least one split portion (e.g., a non-conductive portion). According to an embodiment, the at least one conductive portion may be electrically connected to a wireless communication circuit (e.g., the wireless communication module 192 of FIG. 1), thereby being used as an antenna operating in a predetermined frequency band (e.g., a legacy band or a sub-6 band).

According to various embodiments, the second side surface member 221 may include a fourth side surface 2211 at least partially corresponding to the first surface 2111 and having a third length, a fifth side surface 2212 extending from the fourth side surface 2211 in a direction substantially parallel to the second side surface 2112 and having a fourth length that is longer than the third length, and a sixth side surface 2213 extending from the fifth side surface 2212 to correspond to the third side surface 2113 and having the third length. According to an embodiment, at least a portion of the second side surface member 221 may be made of a conductive material (e.g., metal). According to an embodiment, at least a portion of the second side surface member 221 may include at least one conductive portion split by at least one split portion (e.g., a non-conductive portion). According to an embodiment, the at least one conductive portion may be electrically connected to a wireless communication circuit (e.g., the wireless communication module 192 of FIG. 1), thereby being used as an antenna operating in a predetermined frequency band (e.g., a legacy band or a sub-6 band).

According to various embodiments, the first side surface 2111 and the fourth side surface 2211 may be slidably coupled to each other, and the third side surface 2113 and the sixth side surface 2213 may be slidably coupled to each other. According to an embodiment, in the slide-in state, at least a portion of the first side surface 2111 overlaps at least a portion of the fourth side surface 2211, whereby the remaining portion of the first side 2111 may be disposed to be seen from outside. According to an embodiment, in the slide-in state, at least a portion of the third side surface 2113 overlaps at least a portion of the sixth side surface 2213, whereby the remaining portion of the third side 2113 may be disposed to be seen from outside.

According to various embodiments, the electronic device 200 may include a flexible display 230 disposed to be supported by at least a portion of the first housing 210 and the second housing 220. According to an embodiment, the flexible display 230 may include a first portion 230a (e.g., a flat portion) that is always seen from outside, and a second portion 230b (e.g., a bendable portion) extending from the first portion 230a and at least partially slid into the inner space (e.g., the second space 2202 in FIG. 8A) of the electronic device 200 not to be seen from outside in the slide-in state. According to an embodiment, the first portion 230a and the second portion 230b may be disposed to be supported by at least a portion the first housing 210 and of the second housing 220. According to an embodiment, in the slide-out state in which the first housing 210 is moved from the second housing 220 along a predetermined first direction (direction ①), at least a portion of the second portion 230b may at least partially extend from the first portion 230a while being supported by the first housing 210 and the second housing 220 and may be disposed to form substantially the same plane as the first portion 230a and to be seen from outside. According to an embodiment, in the slide-in state in which the first housing 210 is moved into the second housing 220 along a predetermined second direction (direction ②), at least a portion of the second portion 230b may be slid into the inner space (e.g., the second space 2202 of FIG. 8A) of the electronic device 200 and may be arranged not to be seen from outside. Accordingly, the display area of the flexible display 230 may be variable as the first housing 210 moves in a sliding manner along a predetermined direction.

According to various embodiments, the first housing 210 and the second housing 220 may be operated relative to each other in a sliding manner such that the entire length is variable. According to an embodiment, the electronic device 200 may be configured to have a first length L1 from the second side surface 2112 to the fifth side surface 2212 in the slide-in state. According to an embodiment, the electronic device 200 may be configured such that in the slide-out state, the first housing 210 of the electronic device 200 moves from the second housing 220 to have an additional second length L2, thereby having a third length L3 longer than the first length L1. For example, in the slide-in state, the flexible display 230 may have a display area substantially corresponding to the first length L1, and in the slide-out state, the flexible display 230 may have an expanded display area substantially corresponding to the third length L3.

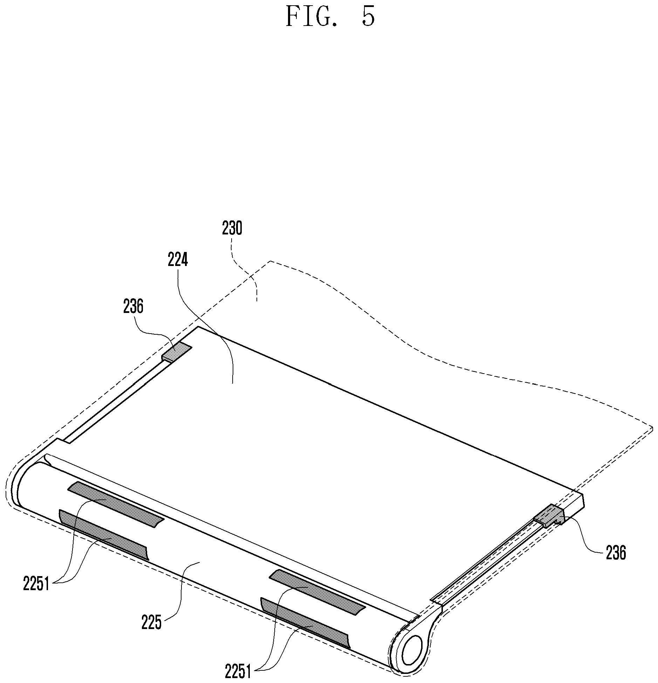

According to various embodiments, the slide-out operation of the electronic device 200 may be performed through a user's manipulation. For example, the electronic device 200 may be switched from the slide-in state to the slide-out state through the user's manipulation that presses the outer surface of the flexible display 230 in the predetermined first direction (direction ①). In some embodiments, the first housing 210 may be slid out in the predetermined first direction (e.g., direction ①) through manipulation of a locker (not illustrated) exposed through the rear surface 200b of the electronic device 200. In some embodiments, the first housing 210 may be automatically operated by a drive mechanism (e.g., a drive motor, a reduction module, and/or a gear assembly) disposed in the inner space (e.g., the first space 2101 in FIG. 5A) of the first housing 210 and/or the inner space of the second housing 220. According to an embodiment, the electronic device 200 may be configured to control the operation of the first housing 210 and/or the second housing 220 via the drive mechanism when an event for switching between the slide-in state and the slide-out state of the electronic device is detected via a processor (e.g., the processor 120 in FIG. 1). In some embodiments, the processor (e.g., the processor 120 in FIG. 1) of the electronic device 200 may control the flexible display 230 to display an object in various ways and execute an application in response to the changed display area of the flexible display 230 depending on the slide-in state, the slide-out state, or an intermediate state (e.g., including a free-stop state).

According to various embodiments, the electronic device 200 may include at least one of an input device 203, sound output devices 206 and 207, at least one sensor module 204, at least one camera module 205, a connector port (not illustrated), a key input device (not illustrated), or an indicator (not illustrated) disposed in the inner space (e.g., the inner space 2101 of FIG. 8A) of the first housing 210 and/or the inner space (e.g., the first space 2201 in FIG. 8A) of the second housing 220. In another embodiment, the electronic device 200 may be configured such that at least one of the above-described components is omitted or other components are additionally included.

According to various embodiments, the input device 203 may include a microphone. In some embodiments, the input device 203 may include a plurality of microphones arranged to detect the direction of sound. The sound output devices 206 and 207 may include a speaker. The sound output devices 206 and 207 may include a communication receiver 206 and an external speaker 207. According to an embodiment, the external speaker 207 may be disposed in the inner space of the second housing 220 or the second housing 210. According to an embodiment, the communication receiver 206 may include a speaker that is operated without a separate speaker hole (e.g., a piezo speaker).

According to various embodiments, at least one sensor module 204 may generate an electrical signal or a data value corresponding to an internal operating state of the electronic device 200 or an external environmental state. According to an embodiment, at least one sensor module 204 may be disposed to detect an external environment through, for example, at least a portion of the flexible display 230. In some embodiments, the electronic device 200 may further include at least one additional sensor module disposed to detect an external environment through the rear surface 200b. According to an embodiment, the sensor module 204 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiment, the at least one camera module 205 may include one or more lenses, an image sensor, and/or an image signal processor. According to an embodiment, the at least one camera module 205 may be disposed under the flexible display 230 and may be configured to photograph a subject through a portion of an active area of the flexible display 230. For example, the at least one camera module 205 or the at least one sensor module 204 may be disposed in the inner space of the electronic device 200 to be in contact with the external environment through a transmission area or an opening perforated in the flexible display 230. According to an embodiment, the area of the flexible display 230, which faces the at least one camera module 205, may be configured as a transmission area having a predetermined transmittance as a portion of a content display area. According to an embodiment, the transmission area may have a transmittance ranging from about 5% to about 20%. The transmission area may include an area overlapping the effective area (e.g., a view angle area) of the least one camera module 205 through which light imaged by an image sensor to generate an image passes. For example, the transmission area of the flexible display 230 may include an area having a lower pixel density and/or a lower wiring density than the surrounding area. For example, the transmission area may replace the above-mentioned opening. For example, the at least one camera module 205 may include an under-display camera (UDC). In some embodiments, the at least one sensor module 204 may be disposed to execute the functions thereof in the inner space of the electronic device 200 without being visually exposed through the flexible display 230. In some embodiments, the electronic device 200 may further include at least one additional camera module disposed to photograph an external subject through the rear surface 200b.

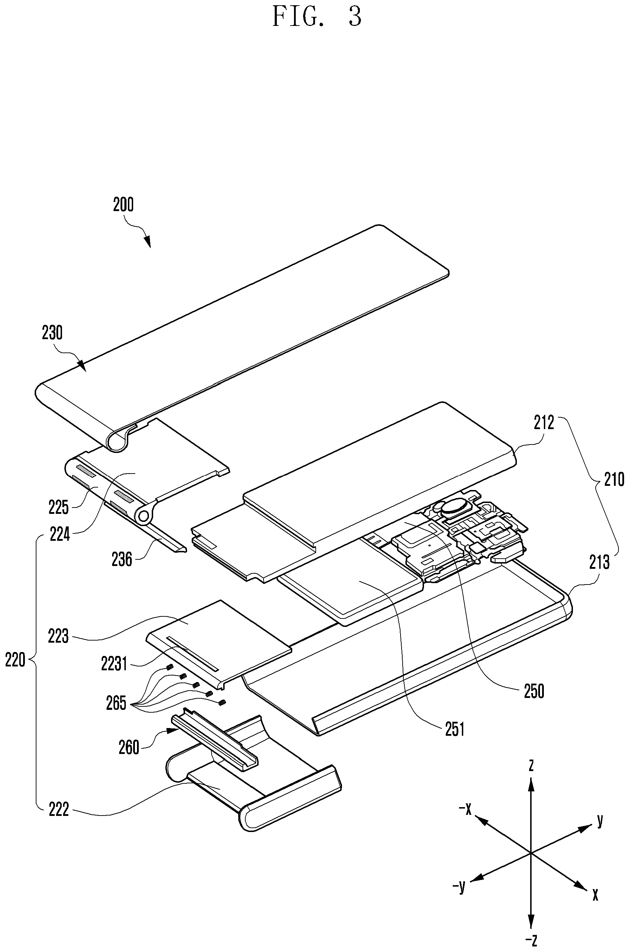

FIG. 3 is an exploded perspective view illustrating an electronic device according to various embodiments of the disclosure.

Referring to FIG. 3, the electronic device 200 includes a first housing 210, a second housing 220 slidably coupled to the first housing 210, and a flexible display 230 disposed to be supported by at least a portion of the first housing 210 and the second housing 220. According to an embodiment, the first housing 210 may be configured through the coupling of the first bracket housing 212 and the second bracket housing 213. According to an embodiment, the first housing 210 may include an inner space (e.g., the inner space 2101 of FIG. 8A) provided through a coupling structure of the first bracket housing 212 and the second bracket housing 213. According to an embodiment, the electronic device 200 may include a main board 250 disposed in an inner space (e.g., the inner space 2201 of FIG. 8A) of the first housing 210. According to an embodiment, the electronic device 200 may include a camera module (e.g., the camera module 205 in FIG. 2A) or a sensor module (e.g., the sensor module 204 in FIG. 2A) disposed on the board 250 in the inner space (e.g., the inner space 2101 in FIG. 8A). According to an embodiment, the electronic device 200 may include at least one battery 251 disposed near the main board 250 or disposed to at least partially overlap the main board 250 in the inner space (e.g., the inner space 2101 of FIG. 8A). According to an embodiment, by being fixed to the first housing 210 (e.g., the first bracket housing 212 of FIG. 3), the flexible display 230 may be moved in conjunction with the sliding motion of the first housing and may not be fixed to the support plate 224.

According to various embodiments, the second housing 220 may include a first base housing 222 surrounding at least a portion of the first housing 210, a second base housing 223 coupled to the first base housing 222, and a support plate 224 coupled to the second base housing 223 and configured to support at least a portion of the flexible display 230. According to an embodiment, the first base housing 222, the second base housing 223, and/or the support plate 224 may be configured integrally with each other or may be provided as separate components and structurally coupled to each other. In some embodiments, at least one of the first base housing 222, the second base housing 223, and/or the support plate 224 may be omitted. According to an embodiment, the second housing 220 may include a first space (e.g., the first space 2201 of FIG. 8A) defined through the coupling of the first base housing 222 and the second base housing 223 and a second space (e.g., the second space 2202 of FIG. 8A) defined through the coupling of the second base housing 223 and the support plate 224. According to an embodiment, at least a portion of the second portion 230b of the flexible display 230 may be disposed to be movable along the second space 2202 between the second base housing 223 and the support plate 224. According to an embodiment, the electronic device 200 may include a support member 225 disposed on the support plate 224 and configured to guide at least a portion of the second portion 230b of the flexible display 230 to the second space 2202 and to induce a smooth sliding motion of the flexible display 230. According to an embodiment, the support member 225 may include a support roller rotatably coupled to the support plate 224. In some embodiments, the support member 225 may be disposed in a manner of being fixed to the support plate 224. In this case, the support member 225 may be integrally configured with the support plate 224.

According to various embodiments, the electronic device 200 includes a blocking member 260 disposed to be movable in the first space 2201 between the first base housing 222 and the second base housing 223 and an elastic member 265 configured to press the blocking member 260 to a slide-out direction (e.g., the y-axis direction) opposite to the flexible display 230. According to an embodiment, the elastic member 265 may include at least one coil spring disposed to be supported by the first base housing 222. In some embodiments, the coil spring may be replaced with a similar resilient structure such as a resilient leaf spring or a torsion spring. In some embodiments, the elastic member 265 may include elastic bodies having the same or different shapes and/or sizes and arranged at one or more predetermined intervals to uniformly press the blocking member 260 for each area. According to an embodiment, the blocking member 260 operates to block a separation space (e.g., the separation space 2203 in FIG. 8A) between the second housing and the flexible display by being in contact with the outer surface of the flexible display 230 when the electronic device 200 is in the slide-in state and the slide-out state. For example, in the slide-in state, the blocking member 260 blocks the separation space 2203 by being maintained in the state of being in contact with the outer surface of the flexible display 230 by being pressed by the first housing 210. According to an embodiment, in the slide-out state, the blocking member 260 blocks the separation space 2203 by being maintained in the state of being in contact with the outer surface of the flexible display 230 by being pressed by the slide stopper 236 which moves together with the flexible display 230. According to an embodiment, while the electronic device 200 is being switched from the slide-in state to the slide-out state, for example, the pressing force of the first housing 210 is released (e.g., an intermediate state) (e.g., including a free-stop state), the blocking member 260 may induce a smooth sliding motion of the flexible display 230 by being spaced apart from the outer surface of the flexible display 230 through the pressing force of the elastic member 265. According to an embodiment, while the electronic device 200 is being switched from the slide-out state to the slide-in state, for example, while the pressing force of the slide stopper 236 is released, the blocking member 260 may induce a smooth sliding motion of the flexible display 230 by being spaced apart from the flexible display 230 by the pressing force of the elastic member 265.

Hereinafter, the operation structure of the blocking member will be described in detail.

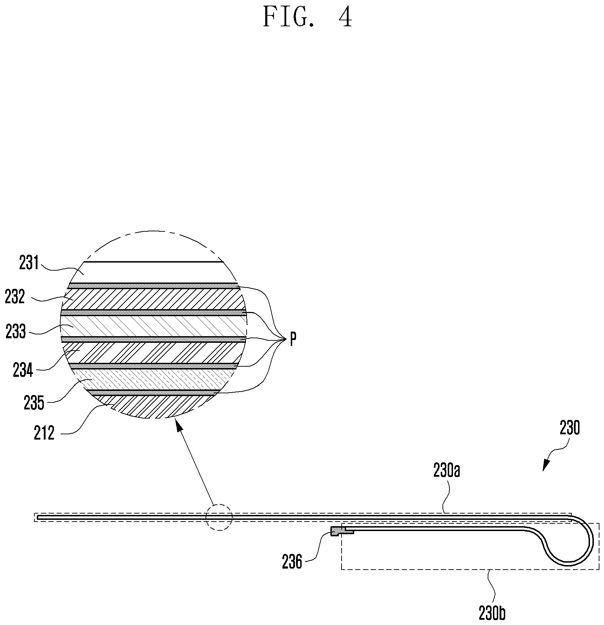

FIG. 4 is a view illustrating a configuration of a flexible display according to various embodiments of the disclosure. FIG. 5 is a view illustrating a state in which a flexible display is supported by a support plate and a support roller according to various embodiments of the disclosure.

Referring to FIGS. 4 and 5, the flexible display 230 may include a first portion 230a disposed to be seen from outside when the electronic device 200 is in the slide-in state, and a second portion 230b extending from the first portion 230a, wherein, when the electronic device 200 is in the slide-in state, the second portion 230b is at least partially accommodated in the inner space (e.g., the second space 2202 of FIG. 8A) of the electronic device 200 not to be seen from outside. According to an embodiment, in the slide-out state, at least a portion of the second portion 230b may be maintained in the state of being accommodated in the inner space (e.g., the second space 2202 of FIG. 8A) of the electronic device 200 not to be seen from outside.

According to various embodiments, the flexible display 230 may include a protective layer 231 (e.g., a window layer), and a polarizer (POL) 232 (e.g., a polarizing film), a display panel 233, a polymer member 234, and a metal sheet layer 235, which are sequentially laminated on the protective layer 231. According to an embodiment, the protective layer 231 may include a polymer layer and/or a glass layer laminated with the polymer layer. According to an embodiment, the protective layer 231 may include polyethylene terephthalate (PET) or polyimide (PI) as the polymer layer, and may include ultra-thin glass (UTG) as the glass layer. According to an embodiment, the protective layer 231 may be made of a glass layer (e.g., UTG) and a polymer layer (PET or PI) that is laminated on the glass layer and corresponds to an external environment.

According to various embodiments, the protective layer 231, the polarizer 232, the display panel 233, the polymer member 234, and the metal sheet layer 235 may be bonded to each other via an adhesive P. For example, the adhesive P may include at least one of an optical clear adhesive (OCA), a pressure-sensitive adhesive (PSA), a heat-responsive adhesive, a general adhesive, or a double-sided tape. According to an embodiment, the flexible display 230 may be bonded to the first housing 210 (e.g., the first bracket housing 212) via another adhesive member. In some embodiments, the polarizer 232 may be replaced with a color filter and a black matrix (BM).

According to various embodiments, a dark color (e.g., black) may be applied to the polymer member 234 to help display a background when the display is turned off. According to an embodiment, the polymer member 234 may act as a cushion for preventing the flexible display 230 from being damaged by absorbing an impact from the outside of the electronic device 200. In some embodiments, the polymeric member 234 may be disposed under the metal sheet layer 235.

According to various embodiments, the metal sheet layer 235 may help reinforce the rigidity of the electronic device 200, and may be used to block ambient noise, dissipate heat emitted from surrounding heat-emitting components, and provide flexibility to the flexible display 230. According to an embodiment, the metal sheet layer 235 may include a pattern in which openings of are formed (e.g., a lattice pattern) and which is disposed in an area that faces at least a portion of the second portion 230b of the flexible display 230 to be capable of providing flexibility to the flexible display 230. According to an embodiment, the bending characteristic of the flexible display 230 may be determined through the shape or arrangement of the multiple openings. According to an embodiment, the metal sheet layer 235 may include at least one of steel use stainless (SUS) (e.g., stainless steel (STS)), Cu, Al, or a CLAD (e.g., a layered member in which SUS and Al are alternately disposed). In another embodiment, the metal sheet layer 235 may include other alloy materials. According to an embodiment, the metal sheet layer 235 may be made of a metal material that is affected by magnetic force to respond to the magnetic force of at least one first magnet 2251 disposed on the support member 225. According to an embodiment, the flexible display 230 may help maintain a uniform space between the flexible display 230 and a surrounding structure (e.g., the support plate 224) by executing a sliding operation in a closely attached state without lifting from the outer surface of the support member 225 by the metal sheet layer that responds to the at least one first magnet 2251. According to an embodiment, the slide stopper 236 may be fixed to an end of the second portion 230b and may be coupled to be slidable through left and right side surfaces of the support plate 224. In some embodiments, the slide stopper 236 may be replaced with two or more structures arranged to press the blocking member 260 at a predetermined interval at an end of the flexible display 230. Therefore, when the flexible display 230 is switched from the slide-in state to the slide-out state or from the slide-out state to the slide-out state, the slide stopper 236 may move only in the sliding direction through the guide coupling structure with the support plate 224.

In some embodiments, the flexible display 230 may further include a detection member (not illustrated) configured to detect an input by an electromagnetic induction-type writing member. According to an embodiment, the detection member may include a digitizer. According to an embodiment, the detection member may be disposed between the display panel 233 and at least one polymer member 234. In another embodiment, the detection member may be disposed under the metal sheet layer 235, and the metal sheet layer 235 may have a structural shape (e.g., multiple openings) capable of detecting a signal (e.g., a resonant frequency) of the electronic pen by the detection member.

According to various embodiments, the flexible display 230 may include at least one functional member (not illustrated) disposed between the polymer member 234 and the metal sheet layer 235. According to an embodiment, the functional member may include a graphite sheet for heat dissipation, a force touch FPCB, a fingerprint sensor FPCB, an antenna radiator for communication, a heat dissipation sheet, a conductive/non-conductive tape, and/or an open cell sponge.

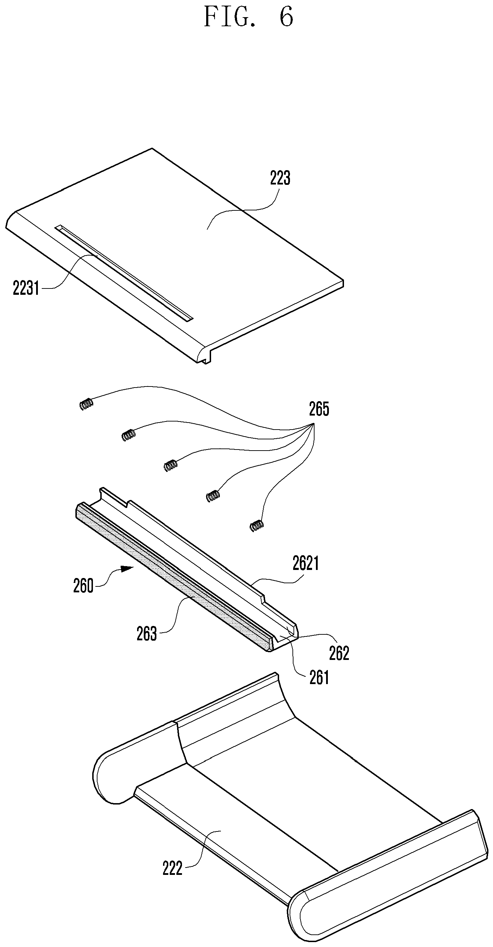

FIG. 6 is an exploded perspective view of a second housing including a blocking member according to various embodiments of the disclosure.

Referring to FIG. 6, the second housing (e.g., the second housing 220 of FIG. 3) may include a first base housing 222 and a second base housing 223 coupled to the first base housing 222. According to an embodiment, the blocking member 260 may be disposed to be movable in a first space (e.g., the first space 2201 of FIG. 8A) defined by the first base housing 222 and the second base housing 223 while being pressed by an elastic member 265. According to an embodiment, the blocking member 260 may include a plate portion 261 and a bent portion 262 extending from the plate portion 261 and bent. According to an embodiment, the bent portion 262 may include a protrusion 2621 that at least partially protrudes into a second space (e.g., the second space 2202 in FIG. 8A) between the second base housing 223 and a support plate (e.g., the support plate 224 in FIG. 3) through a through-slit 2231 provided in the second base housing 223. According to an embodiment, the protrusion 2621 may be configured integrally with the bent portion 262. In some embodiments, the protrusion 2621 may be separated from the bent portion 262 and may be structurally coupled with the bent portion 262. According to an embodiment, the protrusion 2621 may be placed at a position where the protrusion 2621 is interfered with (or pressed by) a slide stopper (e.g., the slide stopper 236 of FIG. 3) that slidably operates in the second space 2202.

According to various embodiments, the blocking member 260 may include a contact member 263, which is disposed on the plate portion 261 and selectively comes into contact with the outer surface of the flexible display (e.g., the flexible display 230 of FIG. 3) according to the movement of the blocking member 260. According to an embodiment, the contact member 263 may include a material that does not damage the outer surface of the flexible display 230 by the pressing force of the blocking member 260. According to an embodiment, the contact member 263 may include at least one of sponge, silicone, urethane, or rubber.

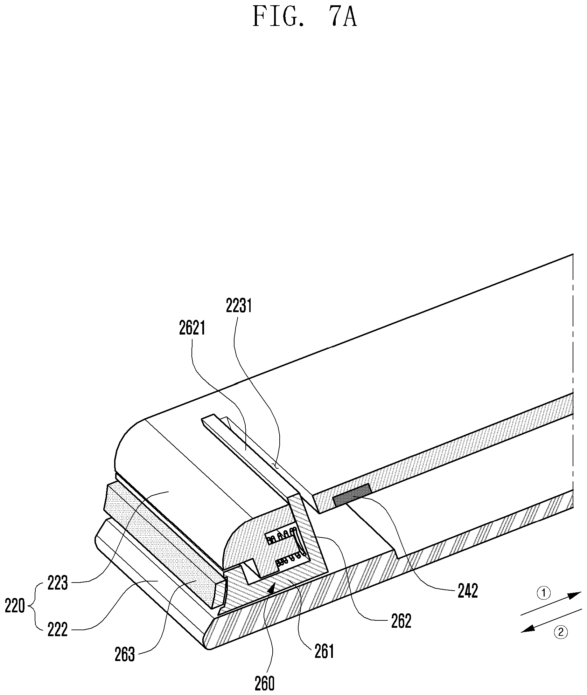

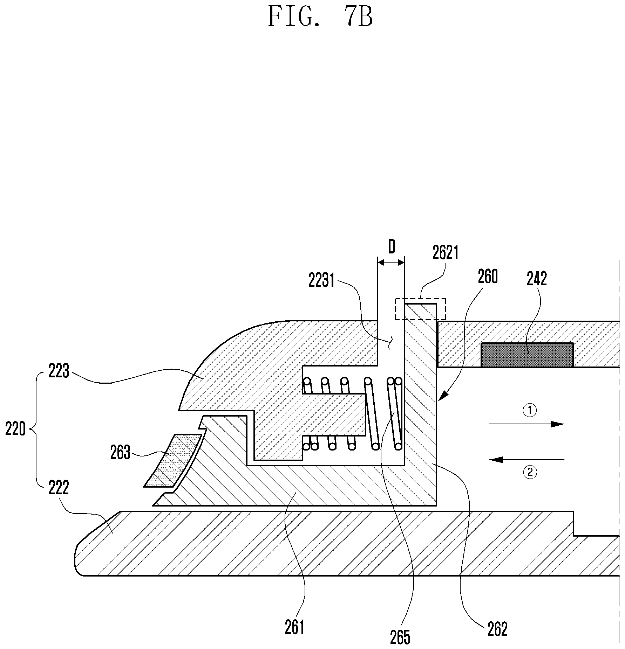

FIGS. 7A and 7B are views illustrating a state in which the blocking member is coupled to the first housing according to various embodiments of the disclosure.

Referring to FIGS. 7A and 7B, the blocking member 260 may be disposed to be movable between the first base housing 222 and the second base housing 223. According to an embodiment, the blocking member 260 may be disposed to be pressed in a predetermined first direction (direction ①) (e.g., the direction in which the first housing 210 is slid out) by at least one elastic member 265 disposed to be supported by the second base housing 223. According to an embodiment, when the electronic device 200 is in the drawn-in state and the slide-out state, the blocking member 260 may come into contact with the outer surface of the flexible display 230 via the contact member 263 by being pressed by the first housing 210 and the slide stopper (e.g., the slide stopper 236 of FIG. 3 ) in a second direction (direction ②) opposite to the first direction (direction ①) by the first housing 210 and the slide stopper (e.g., the slide stopper 236 in FIG. 3). According to an embodiment, while the electronic device 200 is being switched from the slide-in state to the slide-out state or being switched from the slide-out state to the slide-in state, for example, while the pressing force of the first housing 210 or the stopper 236 is being released, the blocking member 260 may induce a smooth sliding motion of the flexible display 230 since the contact member 263 is spaced apart from the outer surface of the flexible display 230 by the pressing force of the elastic member 265.

According to various embodiments, the moving distance (slide stroke D) of the blocking member 260 may be determined through the through-slit 2231 provided in the second base housing 223. According to an embodiment, the through-slit 2231 may protect the outer surface of the flexible display 230 by preventing excessive movement of the blocking member 260 pressed by the first housing 210 and/or the slide stopper 236. According to an embodiment, the slide stroke D of the blocking member 260 through the through-slit 2231 may be set to about 0.5 mm or more.

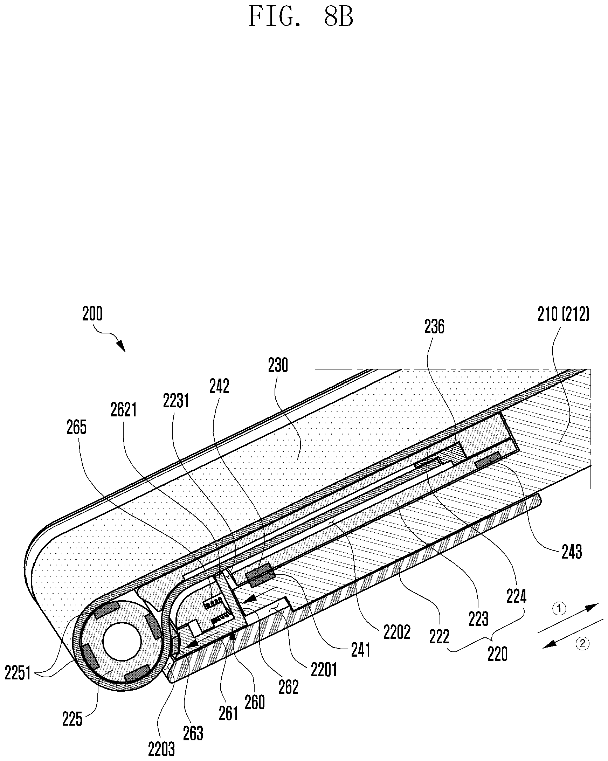

FIGS. 8A and 8B are partial cross-sectional views of the electronic device according to various embodiments of the disclosure taken along line 8a-8a in FIG. 2A.

Referring to FIGS. 8A and 8B, the electronic device 200 may include a second magnet 241 disposed in the first housing 210, a first magnetic force response member 242 disposed at a corresponding position of the second base housing 223 to be affected by the magnetic force of the second magnet 241 in the slide-in state, and a second magnetic force response member 243 disposed at a corresponding position of the second base housing 223 to be affected by the magnetic force of the second magnet 241 in the slide-out state. According to an embodiment, the first housing 210 may be continuously maintained in the slide-in state via the first magnetic force response member 242, which responds to the magnetic force of the second magnet 241. According to an embodiment, the first housing 210 may be continuously maintained in the slide-out state via the second magnetic force response member 243, which responds to the magnetic force of the second magnet 241. According to an embodiment, the first magnetic force response member 242 and/or the second magnetic force response member 243 may include a metal that responds to the magnetic force and/or a magnet. In some embodiments, the first magnetic force response member 242 and/or the second magnetic force response member 243 disposed in the second base housing 223 may be replaced with a magnet, and the second magnet 241 disposed in the first housing 210 may be with a metal that responds to the magnetic force of the magnet. In some embodiments, the second magnet 241 may be replaced with an electromagnet.

According to various embodiments, the blocking member 260 may be pressed by the first housing 210 in the slide-in state. According to an embodiment, the first housing 210 may be continuously maintained in the slide-in state via the coupling force between the second magnet 241 and the first magnetic force response member 242, which responds to the magnetic force of the second magnet 241. For example, in order to prevent the first housing 210 from being arbitrarily moved, except for intended manipulation of the flexible display 230 by an external force for the sliding motion, the coupling force between the second magnet 241 and the first magnetic force response member 242 may be set to be greater than the pressing force of the elastic member 265. According to an embodiment, the blocking member 260 may move in the second direction (direction ②) toward the flexible display 230 while holding the pressing force of the elastic member 265 according to the movement of the first housing 210, and the contact member 263 disposed on the blocking member 260 may come into contact with the outer surface of the flexible display 230. Accordingly, in the slide-in state, the separation space 2203 between the flexible display 230 and the second housing 220 may be blocked by the contact member 263 to prevent inflow of foreign materials.

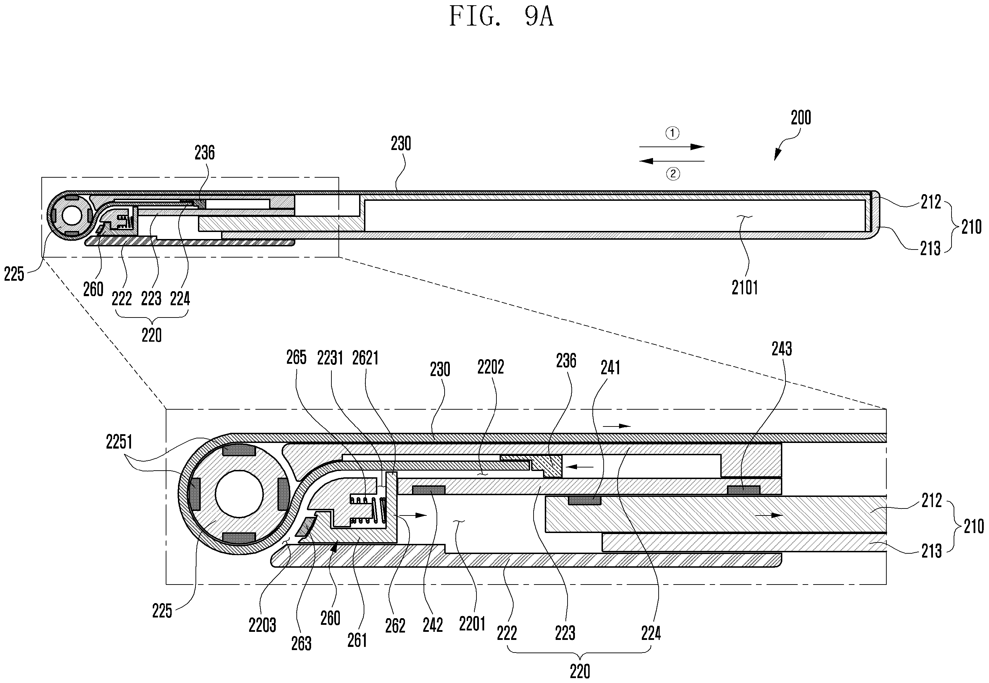

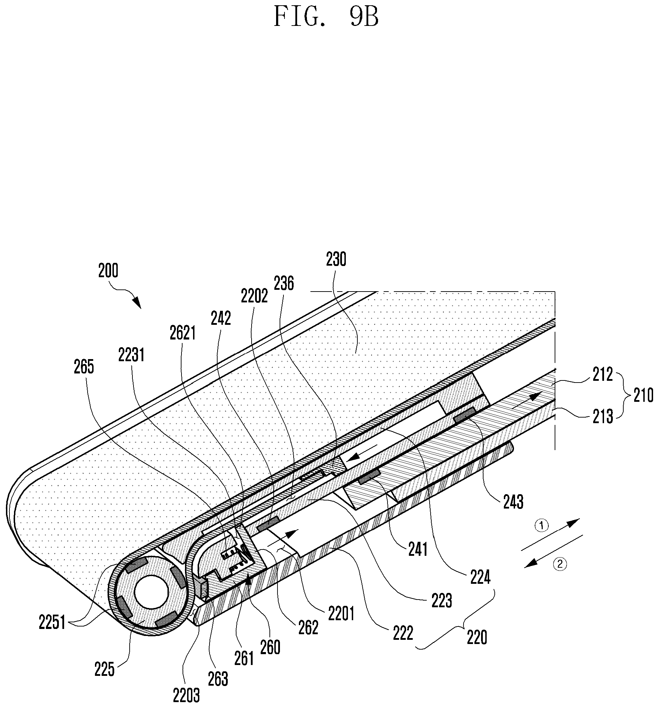

FIGS. 9A and 9B are cross-sectional views of an electronic device according to various embodiments of the disclosure in an intermediate state.

Among the components of the electronic device 200 of FIGS. 9A and 9B, the same reference numerals may be assigned to components substantially the same as those of the electronic device 200 of FIGS. 8A and 8B, and detailed descriptions thereof may be omitted.

Referring to FIGS. 9A and 9B, the electronic device 200 may execute an operation of being switched from the slide-in state to the slide-out state. For example, the flexible display 230 may move in the first direction (① direction) through a user's manipulation. In this case, the coupling force between the second magnet 241 disposed on the first housing 210 and the first magnetic force response member 242 disposed on the second base housing 223 may be released. According to an embodiment, by the pressing force of the elastic member 265, the blocking member 260 is moved in the first direction (direction ①), and the contact member 263 is spaced apart from the flexible display 230 so that a smooth sliding motion of the flexible display 230 can be induced.

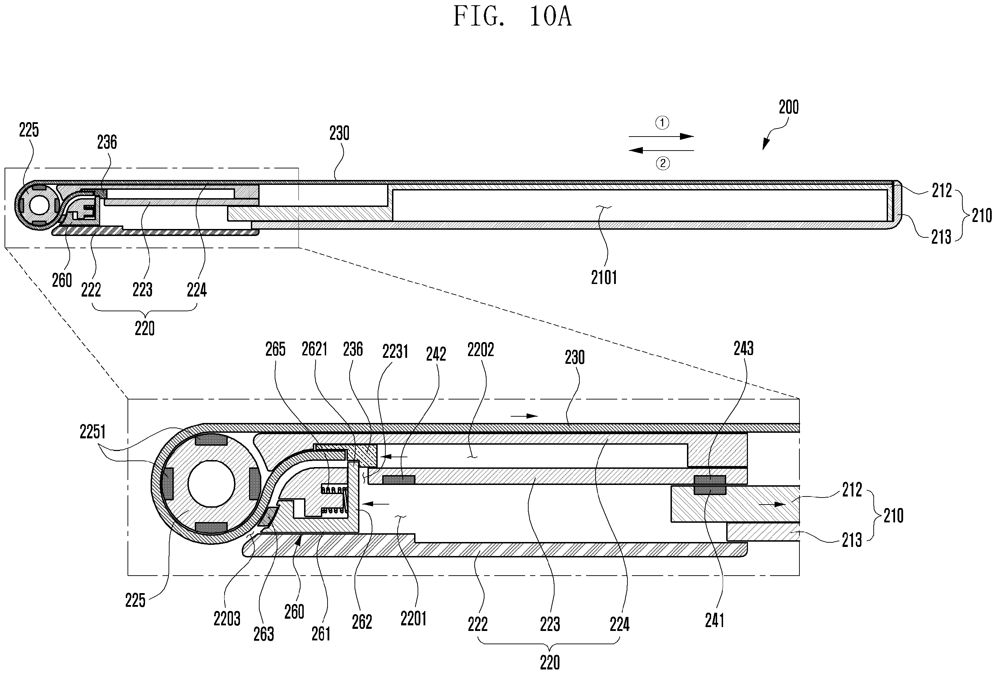

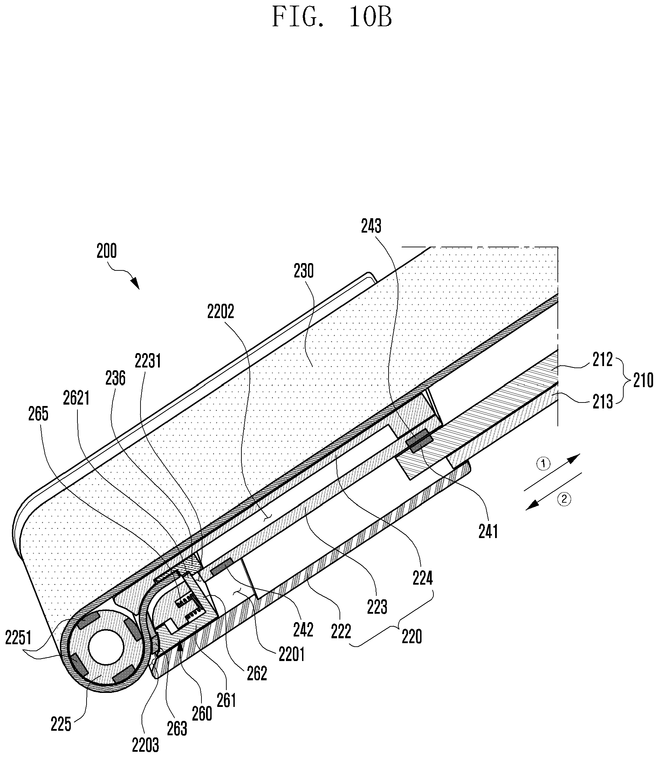

FIGS. 10A and 10B are partial cross-sectional views of the electronic device according to various embodiments of the disclosure taken along line 10a-10a in FIG. 2B.

Among the components of the electronic device 200 of FIGS. 10A and 10B, the same reference numerals may be assigned to components substantially the same as those of the electronic device 200 of FIGS. 8A and 8B, and detailed descriptions thereof may be omitted.

Referring to FIGS. 10A and 10B, the blocking member 260 may be pressed by the slide stopper 236 in the slide-out state. For example, the protrusion 2621 of the blocking member 260 that protrudes from the first space 2201 through the through-slit 2231 of the second base housing 223 may be pressed by being brought into contact with the slide stopper 236 moving in the second space 2202. According to an embodiment, the first housing 210 may be continuously maintained in the slide-out state via the coupling force between the second magnet 241 and the second magnetic force response member 243, which responds to the magnetic force of the second magnet 241. For example, in order to prevent the first housing 210 from being arbitrarily moved, except for intended manipulation of the flexible display 230 by an external force for the sliding motion, the coupling force between the second magnet 241 and the second magnetic force response member 243 may be set to be greater than the pressing force of the elastic member 265. According to an embodiment, the blocking member 260 may move in the second direction (direction ②) toward the flexible display 230 while holding the pressing force of the elastic member 265 according to the movement of the slide stopper 236, and the contact member 263 disposed on the blocking member 260 may come into contact with the outer surface of the flexible display 230. Accordingly, in the slide-in state, the separation space 2203 between the flexible display 230 and the second housing 220 may be blocked by the contact member 263 to prevent inflow of foreign materials.

According to various embodiment, an electronic device (e.g., the electronic device 200 of FIG. 2B) may include a first housing (e.g., the first housing 210 of FIG. 2B), a second housing (e.g., the second housing 220 in FIG. 2B) slidably connected to the first housing, a flexible display (e.g., the flexible display 230 of FIG. 2B) disposed to be supported by the first housing and at least partially supported by the second housing, wherein the flexible display includes a first portion (e.g., the first portion 230a in FIG. 2B) disposed to be seen from outside in a slide-in state and a second portion (e.g., the second portion 230b in FIG. 2B) extending from the first portion, the second portion being at least partially accommodated in an inner space (e.g., the second space 2202 of FIG. 8A) of the second housing in the slide-in state and exposed to be seen from outside in the slide-out state, a slide stopper (e.g., the slide stopper 236 of FIG. 8A) fixed to the second portion and disposed to be slidable in the inner space of the second housing, and a blocking member (e.g., the blocking member 260 of FIG. 8A) disposed to be movable in the inner space to be pressed by the first housing in the slide-in state and pressed by the slide stopper in the slide-out state. The blocking member may be configured to come into contact with an outer surface of the flexible display in the slide-out state and the slide-in state by being pressed by the first housing and the slide stopper.

According to various embodiment, the blocking member may be spaced apart from the flexible display by a predetermined spacing during a sliding operation in which switching from the slide-in state to the slide-out state is performed.

According to various embodiment, the second housing may include a first base housing surrounding at least a portion of the first housing, a second base housing coupled to the first base housing, and a support plate coupled to the second base housing and configured to support at least a portion of the flexible display.

According to various embodiment, the inner space may include a first space defined by the first base housing and the second base housing, and a second space defined by the second base housing and the support plate, and at least a portion of the flexible display may be accommodated in the second space.

According to various embodiment, the first housing may be disposed to be slidable in the first space, and the blocking member is disposed to be movable by a predetermined distance in the first space.

According to various embodiment, the electronic device may include at least one elastic member disposed to be supported by the second base housing to press the blocking member in a first direction in which the first housing is slid out.

According to various embodiment, the blocking member may include a plate portion, a bent portion extending from the plate portion and including a protrusion at least partially protruding into the second space through a through slit provided in the second base housing, and a contact member disposed on the plate portion and configured to selectively come into contact with an outer surface of the flexible display according to movement of the blocking member.

According to various embodiment, the contact member may include sponge, silicone, urethane, or rubber.

According to various embodiment, the slide stopper may be guided through the support plate in the second space and may slide along with the flexible display according to movement of the flexible display.

According to various embodiment, in the slide-out state, the slide stopper may press the protrusion in a second direction opposite to the first direction in the second space, and the contact member may come into contact with the outer surface of the flexible display.

According to various embodiment, in the slide-in state, the first housing may press the bent portion in the second direction in the first space, and the contact member may come into contact with the outer surface of the flexible display.

According to various embodiment, the electronic device may include a first magnet disposed in the first housing, and a first magnetic force response member disposed at a corresponding position of the second base housing to be affected by the magnetic force of the first magnet in the slide-in state, and the slide-in state is maintained by the first magnetic force response member configured to respond to the magnetic force of the first magnet.

According to various embodiment, the electronic device may include a second magnetic force response member disposed at a corresponding position of the second base housing to be affected by the magnetic force of the first magnet in the slide-out state, and the slide-in state may be maintained by the second magnetic force response member configured to respond to the magnetic force of the first magnet.

According to various embodiment, the first magnetic force response member and/or the second magnetic force response member may include a metal that responds to a magnetic force and/or a magnet.

According to various embodiment, the electronic device may further include a support member disposed on the support plate, and at least a portion of the second portion of the flexible display may be guided to the second space through the support member.

According to various embodiment, the support member may include a support roller disposed to be rotatable on the support plate.

According to various embodiment, the support member may include at least one second magnet on an outer surface thereof, the flexible display may be disposed under a display panel and may include a metal sheet layer configured to respond to the magnetic force of the second magnet, and the flexible display may come into close contact with the support roller through the metal sheet layer configured to respond to the magnetic force of the second magnet.

According to various embodiment, an electronic device (e.g., the electronic device 200 of FIG. 2B) may include a first housing (e.g., the first housing 210 of FIG. 2B), a second housing (e.g., the second housing 220 of FIG. 2B) slidably connected to the first housing, the second housing including a first base housing (e.g., the first base housing 222 in FIG. 8A) surrounding at least a portion of the first housing, a second base housing (e.g., the second base housing 223 in FIG. 8A) coupled to the first base housing to define a first space (e.g., the first space 2201 in FIG. 8A), and a support plate (e.g., the support plate 224 in FIG. 8A) coupled to the second base housing to define a second space (e.g., the second space 2202 in FIG. 8A) and configured to support at least a portion of the flexible display, a flexible display (e.g., the flexible display 230 in FIG. 2B) arranged to be supported by the first housing and at least partially supported by the support plate, the flexible display including a first portion (e.g., the first portion 230a in FIG. 2B) disposed to be seen from outside in a slide-in state, and a second portion (e.g., the second portion 230b in FIG. 2B) extending from the first portion and at least partially accommodated in the second space in the slide-in state, a slide stopper (e.g., the slide stopper 236 in FIG. 8A) fixed to the second portion and disposed to be slidable in the second space, and a blocking member (e.g., the blocking member 260 in FIG. 8A) disposed to be movable in the first space and including a protrusion (e.g., the protrusion 2621 in FIG. 8A) that protrudes to the second space, the blocking member being configured to be pressed in a direction away from the flexible display via an elastic member (e.g., the elastic member 265 in FIG. 8A). In the slide-in state, the blocking member may come into contact with the outer surface of the flexible display by being pressed by the first housing, and in the slide-out state, the blocking member may come into contact with the outer surface of the flexible display as the protrusion is pressed by the slide stopper.

According to various embodiment, the electronic device may include a magnet disposed in the first housing, and a first magnetic force response member disposed at a corresponding position of the second base housing to be affected by the magnetic force of the magnet in the slide-in state, and the slide-in state may be maintained by the first magnetic force response member configured to respond to the magnetic force of the magnet.

According to various embodiment, the electronic device may include a first magnetic force response member disposed at a corresponding position of the second base housing to be affected by the magnetic force of the magnet in the slide-out state, and the slide-out state may be maintained by the second magnetic force response member configured to respond to the magnetic force of the magnet.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure.

## Claims

1. An electronic device comprising:
a first housing (210);
a second housing (220) slidably connected to the first housing (210);
a flexible display (230) disposed to be supported by the first housing (210) and at least partially supported by the second housing (220), the flexible display comprising
a first portion (230a) disposed to be seen from outside in a slide-in state, and
a second portion (230b) extending from the first portion (230a), the second (230b) portion being at least partially accommodated in an inner space of the second housing (220) in the slide-in state and exposed to be seen from outside in the slide-out state;
a slide stopper (236) fixed to the second portion (230b) and disposed to be slidable in the inner space of the second housing (220); and
a blocking member (260) included in the second housing and disposed to be movable in the inner space to be pressed by the first housing (210) in the slide-in state and pressed by the slide stopper (236) in the slide-out state,
wherein the blocking member (260) is configured to come into contact with an outer surface of the flexible display (230) by being pressed by the first housing (210) in the slide-in state and by being pressed by the slide stopper (236) in the slide-out state.

2. The electronic device of claim 1, wherein the blocking member (260) is spaced apart from the flexible display (230) by a predetermined spacing during a sliding operation in which switching from the slide-in state to the slide-out state is performed.

3. The electronic device of any of the preceding claims, wherein the second housing (220) comprises:
a first base housing (222) surrounding at least a portion of the first housing (210);
a second base housing (223) coupled to the first base housing (222); and
a support plate (224) coupled to the second base housing (223) and configured to support at least a portion of the flexible display (230).

4. The electronic device of claim 3, wherein the second housing (220) comprises:
a first space (2201) defined by the first base housing (222) and the second base housing (223); and
a second space (2202) defined by the second base housing (223) and the support plate (224), and
wherein at least a portion of the flexible display (230) is accommodated in the second space (22022).

5. The electronic device of claim 4, wherein the first housing (210) is disposed to be slidable in the first space (2201), and
the blocking member (260) is disposed to be movable by a predetermined distance in the first space (2201).

6. The electronic device of claim 3, further comprising at least one elastic member (265) disposed to be supported by the second base housing (223) to press the blocking member (260) in a first direction in which the first housing (210) is slid out.

7. The electronic device of claim 4, wherein the blocking member (260) comprises:
a plate portion (261);
a bent portion (262) extending from the plate portion (261) and comprising a protrusion (2621) at least partially protruding into the second space (2202) through a through slit (2231) provided in the second base housing (223); and
a contact member (263) disposed on the plate portion (261) and configured to selectively come into contact with an outer surface of the flexible display (230) according to movement of the blocking member (260).

8. The electronic device of claim 7, wherein the contact member (263) comprises sponge, silicone, urethane, or rubber.

9. The electronic device of claim 7, wherein the slide stopper (236) is guided through the support plate (224) in the second space (2202) and slides along with the flexible display (230) according to movement of the flexible display (230).

10. The electronic device of claim 9, wherein, in the slide-out state, the slide stopper (236) presses the protrusion (2261) in a second direction opposite to the first direction in the second space (2202), and
wherein the contact member (263) comes into contact with the outer surface of the flexible display (230).

11. The electronic device of claim 10, wherein, in the slide-in state, the first housing (210) presses the bent portion (262) in the second direction in the first space (2201), and
wherein the contact member (263) comes into contact with the outer surface of the flexible display (230).

12. The electronic device of claim 11, further comprising:
a first magnet (241) disposed in the first housing (210); and
a first magnetic force response member (242) disposed at a corresponding position of the second base housing (223) to be affected by a magnetic force of the first magnet (241) in the slide-in state,
wherein the slide-in state is maintained by the first magnetic force response member (242) configured to respond to the magnetic force of the first magnet (241).

13. The electronic device of claim 12, further comprising
a second magnetic force response member (243) disposed at a corresponding position of the second base housing (223) to be affected by the magnetic force of the first magnet (241) in the slide-out state,
wherein the slide-out state is maintained by the second magnetic force response member (243) configured to respond to the magnetic force of the first magnet (241).

14. The electronic device of claim 13, wherein the first magnetic force response member (242) and/or the second magnetic force response member (243) comprise a metal that responds to a magnetic force and/or a magnet.

15. The electronic device of claim 4, further comprising:
a support member (225) disposed on the support plate (224),
wherein at least a portion of the second portion (230b) of the flexible display (230) is guided to the second space (2202) through the support member (225).

## Patentansprüche

1. Elektronische Vorrichtung, umfassend:
ein erstes Gehäuse (210);
ein zweites Gehäuse (220), das verschiebbar mit dem ersten Gehäuse (210) verbunden ist;
eine flexible Anzeige (230), die so angeordnet ist, dass sie von dem ersten Gehäuse (210) gestützt ist und zumindest teilweise von dem zweiten Gehäuse (220) gestützt ist, wobei die flexible Anzeige Folgendes umfasst
einen ersten Abschnitt (230a), der so angeordnet ist, dass er von außen in einem eingeschobenen Zustand zu sehen ist, und
einen zweiten Abschnitt (230b), der sich von dem ersten Abschnitt (230a) aus erstreckt, wobei der zweite Abschnitt (230b) im eingeschobenen Zustand zumindest teilweise in einem Innenraum des zweiten Gehäuses (220) aufgenommen ist und im herausgeschobenen Zustand freiliegt, um von außen gesehen zu werden;
einen Schiebestopper (236), der an dem zweiten Abschnitt (230b) befestigt und so angeordnet ist, dass er in dem Innenraum des zweiten Gehäuses (220) verschiebbar ist; und
ein Blockierelement (260), das in dem zweiten Gehäuse enthalten und so angeordnet ist, dass es in dem Innenraum beweglich ist, um durch das erste Gehäuse (210) in dem eingeschobenen Zustand gedrückt zu werden und durch den Schiebestopper (236) in dem herausgeschobenen Zustand gedrückt zu werden,
wobei das Blockierelement (260) so konfiguriert ist, dass es mit einer äußeren Fläche der flexiblen Anzeige (230) in Kontakt kommt, indem es durch das erste Gehäuse (210) in dem eingeschobenen Zustand gedrückt wird und indem es durch den Schiebestopper (236) in dem herausgeschobenen Zustand gedrückt wird.

2. Elektronische Vorrichtung nach Anspruch 1, wobei das Blockierelement (260) von der flexiblen Anzeige (230) während eines Schiebevorgangs, bei dem ein Wechsel aus dem eingeschobenen Zustand in den herausgeschobenen Zustand durchgeführt wird, um einen vorbestimmten Abstand beabstandet ist.

3. Elektronische Vorrichtung nach einem der vorhergehenden Ansprüche, wobei das zweite Gehäuse (220) Folgendes umfasst:
ein erstes Basisgehäuse (222), das zumindest einen Abschnitt des ersten Gehäuses (210) umgibt;
ein zweites Basisgehäuse (223), das mit dem ersten Basisgehäuse (222) gekoppelt ist; und
eine Stützplatte (224), die mit dem zweiten Basisgehäuse (223) gekoppelt und konfiguriert ist, um mindestens einen Abschnitt der flexiblen Anzeige (230) zu stützen.

4. Elektronische Vorrichtung nach Anspruch 3, wobei das zweite Gehäuse (220) Folgendes umfasst:
einen ersten Raum (2201), der durch das erste Basisgehäuse (222) und das zweite Basisgehäuse (223) definiert ist; und
einen zweiten Raum (2202), der durch das zweite Basisgehäuse (223) und die Stützplatte (224) definiert ist, und
wobei zumindest ein Abschnitt der flexiblen Anzeige (230) in dem zweiten Raum (22022) aufgenommen ist.

5. Elektronische Vorrichtung nach Anspruch 4, wobei das erste Gehäuse (210) so angeordnet ist, dass es in dem ersten Raum (2201) verschiebbar ist, und
das Blockierelement (260) so angeordnet ist, dass es um eine vorbestimmte Strecke in dem ersten Raum (2201) beweglich ist.

6. Elektronische Vorrichtung nach Anspruch 3, ferner umfassend mindestens ein elastisches Element (265), das so angeordnet ist, dass es von dem zweiten Basisgehäuse (223) gestützt ist, um das Blockierelement (260) in eine erste Richtung zu drücken, in der das erste Gehäuse (210) herausgeschoben wird.

7. Elektronische Vorrichtung nach Anspruch 4, wobei das Blockierelement (260) Folgendes umfasst:
einen Plattenabschnitt (261);
einen gebogenen Abschnitt (262), der sich von dem Plattenabschnitt (261) aus erstreckt und einen Vorsprung (2621) umfasst, der zumindest teilweise in den zweiten Raum (2202) durch einen Durchgangsschlitz (2231), der in dem zweiten Basisgehäuse (223) bereitgestellt ist, hineinragt; und
ein Kontaktelement (263), das auf dem Plattenabschnitt (261) angeordnet und konfiguriert ist, um selektiv mit einer äußeren Fläche der flexiblen Anzeige (230) gemäß einer Bewegung des Blockierelements (260) in Kontakt zu kommen.

8. Elektronische Vorrichtung nach Anspruch 7, wobei das Kontaktelement (263) Schaumstoff, Silikon, Urethan oder Gummi umfasst.

9. Elektronische Vorrichtung nach Anspruch 7, wobei der Schiebestopper (236) durch die Stützplatte (224) in dem zweiten Raum (2202) geführt wird und zusammen mit der flexiblen Anzeige (230) gemäß der Bewegung der flexiblen Anzeige (230) verschoben wird.

10. Elektronische Vorrichtung nach Anspruch 9, wobei der Schiebestopper (236) in dem herausgeschobenen Zustand den Vorsprung (2261) in eine zweite Richtung entgegengesetzt zur ersten Richtung in dem zweiten Raum (2202) drückt, und
wobei das Kontaktelement (263) mit der äußeren Fläche der flexiblen Anzeige (230) in Kontakt kommt.

11. Elektronische Vorrichtung nach Anspruch 10, wobei das erste Gehäuse (210) in dem eingeschobenen Zustand den gebogenen Abschnitt (262) in die zweite Richtung in dem ersten Raum (2201) drückt, und
wobei das Kontaktelement (263) mit der äußeren Fläche der flexiblen Anzeige (230) in Kontakt kommt.

12. Elektronische Vorrichtung nach Anspruch 11, ferner umfassend:
einen ersten Magnet (241), der in dem ersten Gehäuse (210) angeordnet ist; und
ein erstes Magnetkraftreaktionselement (242), das an einer entsprechenden Position des zweiten Basisgehäuses (223) positioniert ist, um von einer Magnetkraft des ersten Magneten (241) in dem eingeschobenen Zustand beeinflusst zu werden,
wobei der eingeschobene Zustand durch das erste Magnetkraftreaktionselement (242) aufrechterhalten wird, das konfiguriert ist, um auf die Magnetkraft des ersten Magneten (241) zu reagieren.

13. Elektronische Vorrichtung nach Anspruch 12, ferner umfassend
ein zweites Magnetkraftreaktionselement (243), das an einer entsprechenden Position des zweiten Basisgehäuses (223) positioniert ist, um von der Magnetkraft des ersten Magneten (241) in dem herausgeschobenen Zustand beeinflusst zu werden,
wobei der herausgeschobene Zustand durch das zweite Magnetkraftreaktionselement (243) aufrechterhalten wird, das konfiguriert ist, um auf die Magnetkraft des ersten Magneten (241) zu reagieren.

14. Elektronische Vorrichtung nach Anspruch 13, wobei das erste Magnetkraftreaktionselement (242) und/oder das zweite Magnetkraftreaktionselement (243) ein Metall, das auf eine Magnetkraft reagiert, und/oder einen Magneten umfassen.

15. Elektronische Vorrichtung nach Anspruch 4, ferner umfassend:
ein Stützelement (225), das auf der Stützplatte (224) angeordnet ist,
wobei zumindest ein Abschnitt des zweiten Abschnitts (230b) der flexiblen Anzeige (230) durch das Stützelement (225) in den zweiten Raum (2202) geführt wird.

## Revendications

1. Dispositif électronique, comprenant :
un premier boîtier (210) ;
un deuxième boîtier (220) relié de manière coulissante au premier boîtier (210) ;
un affichage flexible (230) disposé pour être supporté par le premier boîtier (210) et au moins partiellement supporté par le deuxième boîtier (220), l'affichage flexible comprenant
une première partie (230a) disposée de manière à être vue de l'extérieur dans un état de glissement à l'intérieur, et
une deuxième partie (230b) s'étendant à partir de la première partie (230a), la deuxième partie (230b) étant au moins partiellement logée dans un espace intérieur du deuxième boîtier (220) à l'état de glissement à l'intérieur et exposée pour être vue de l'extérieur à l'état de glissement à l'extérieur ;
une butée de glissement (236) fixée à la deuxième partie (230b) et disposée de manière à pouvoir coulisser dans l'espace intérieur du deuxième boîtier (220) ; et
un élément de blocage (260) inclus dans le deuxième boîtier et disposé pour être mobile dans l'espace intérieur afin d'être pressé par le premier boîtier (210) à l'état de glissement à l'intérieur et pressé par la butée de glissement (236) à l'état de glissement à l'extérieur,
dans lequel l'élément de blocage (260) est configuré pour entrer en contact avec une surface extérieure de l'affichage flexible (230) en étant pressé par le premier boîtier (210) à l'état de glissement à l'intérieur et en étant pressé par la butée de glissement (236) à l'état de glissement à l'extérieur.

2. Dispositif électronique de la revendication 1, dans lequel l'élément de blocage (260) est espacé de l'affichage flexible (230) d'un espacement prédéterminé pendant une opération de glissement au cours de laquelle le passage de l'état de glissement à l'intérieur vers l'état de glissement à l'extérieur est effectué.

3. Dispositif électronique de l'une des revendications précédentes, dans lequel le deuxième boîtier (220) comprend :
un premier boîtier de base (222) entourant au moins une partie du premier boîtier (210) ;
un deuxième boîtier de base (223) couplé au premier boîtier de base (222) ; et
une plaque de support (224) couplée au deuxième boîtier de base (223) et configurée pour supporter au moins une partie de l'affichage flexible (230).

4. Dispositif électronique de la revendication 3, dans lequel le deuxième boîtier (220) comprend :
un premier espace (2201) défini par le premier boîtier de base (222) et le deuxième boîtier de base (223) ; et
un deuxième espace (2202) défini par le deuxième boîtier de base (223) et la plaque de support (224), et
dans lequel au moins une partie de l'affichage flexible (230) est logée dans le deuxième espace (22022).

5. Dispositif électronique de la revendication 4, dans lequel le premier boîtier (210) est disposé de manière a pouvoir coulisser dans le premier espace (2201), et
l'élément de blocage (260) est disposé de manière à pouvoir être déplacé d'une distance prédéterminée dans le premier espace (2201).

6. Dispositif électronique de la revendication 3, comprenant en outre au moins un élément élastique (265) disposé pour être supporté par le deuxième boîtier de base (223) afin de presser l'élément de blocage (260) dans une première direction dans laquelle le premier boîtier (210) est glissé à l'extérieur.

7. Dispositif électronique de la revendication 4, dans lequel l'élément de blocage (260) comprend :
une partie de plaque (261) ;
une partie courbée (262) s'étendant à partir de la partie de plaque (261) et comprenant une saillie (2621) faisant au moins partiellement saillie dans le deuxième espace (2202) à travers une fente traversante (2231) prévue dans le deuxième boîtier de base (223) ; et
un élément de contact (263) disposé sur la partie de plaque (261) et configuré pour entrer sélectivement en contact avec une surface extérieure de l'affichage flexible (230) en fonction du mouvement de l'élément de blocage (260).

8. Dispositif électronique de la revendication 7, dans lequel l'élément de contact (263) comprend de l'éponge, du silicone, de l'uréthane ou du caoutchouc.

9. Dispositif électronique de la revendication 7, dans lequel la butée de glissement (236) est guidée à travers la plaque de support (224) dans le deuxième espace (2202) et glisse avec l'affichage flexible (230) en fonction du mouvement de l'affichage flexible (230).

10. Dispositif électronique de la revendication 9, dans lequel, dans l'état de glissement a l'extérieur, la butée de glissement (236) presse la saillie (2261) dans une deuxième direction opposée à la première direction dans le deuxième espace (2202), et
dans lequel l'élément de contact (263) entre en contact avec la surface extérieure de l'affichage flexible (230).

11. Dispositif électronique de la revendication 10, dans lequel, dans l'état de glissement à l'intérieur, le premier boîtier (210) presse la partie courbée (262) dans la deuxième direction dans le premier espace (2201), et
dans lequel l'élément de contact (263) entre en contact avec la surface extérieure de l'affichage flexible (230).

12. Dispositif électronique de la revendication 11, comprenant en outre :
un première aimant (241) disposé dans le premier boîtier (210) ; et
un premier élément de réponse à la force magnétique (242) disposé au niveau d'une position correspondante du deuxième boîtier de base (223) pour être affecté par une force magnétique du premier aimant (241) à l'état de glissement à l'intérieur,
dans lequel l'état de glissement à l'intérieur est maintenu par le premier élément de réponse à la force magnétique (242) configuré pour répondre à la force magnétique du premier aimant (241).

13. Dispositif électronique de la revendication 12, comprenant en outre
un deuxième élément de réponse à la force magnétique (243) disposé au niveau d'une position correspondante du deuxième boîtier de base (223) pour être affecté par la force magnétique du premier aimant (241) dans l'état de glissement à l'extérieur,
dans lequel l'état de glissement à l'extérieur est maintenu par le deuxième élément de réponse à la force magnétique (243) configuré pour répondre à la force magnétique du premier aimant (241).

14. Dispositif électronique de la revendication 13, dans lequel le premier élément de réponse à la force magnétique (242) et/ou le deuxième élément de réponse à la force magnétique (243) comprennent un métal qui répond à une force magnétique et/ou un aimant.

15. Dispositif électronique de la revendication 4, comprenant en outre :
un élément de support (225) disposé sur la plaque de support (224),
dans lequel au moins une partie de la deuxième partie (230b) de l'affichage flexible (230) est guidée vers le deuxième espace (2202) à travers l'élément de support (225).
